# EUROPEAN PATENT APPLICATION

(11) **EP 2 876 706 A2**
(43) Date of publication of application: **27.05.2015**
(21) Application number: 14194106.2
(22) Date of filing: 20.11.2014
(51) Int. Cl.: H01M 2/20, H01M 2/34, H01M 10/42

(54) **Battery pack**

(30) Priority: 21.11.2013 KR 20130142039
(71) Applicant: Samsung SDI Co., Ltd., Yongin-si, Gyeonggi-do (KR)
(72) Inventor: Lee, Sang-Joo, Gyeonggi-do (KR); Kim, Hyung-Sin, Gyeonggi-do (KR)
(74) Representative: Mounteney, Simon James

(57) **Abstract**

A battery pack includes a plurality of bare cells, a protection element, a connecting tab and a protective circuit module. The protection element is positioned on the plurality of bare cells. The connecting tab electrically connects between a plurality of adjacent bare cells and the protection element. The protective circuit module is positioned above the bare cell on which the protection element is positioned. In the battery pack, a hole is formed in an area of the protective circuit module, corresponding to at least one of the position at which the connecting tab and the bare cell are connected and the position at which the connecting tab and the protection element. Accordingly, it is possible to implement the compactness and lightweight of the battery pack and to improve the safety of the battery pack.

## Description

### BACKGROUND

### 1. Field

The present invention relates to a battery pack.

### 2. Description of the Related Art

Secondary batteries can be charged/discharged many times, and accordingly are economically and environmentally efficient. Thus, the use of the secondary batteries is encouraged.

Recently, secondary batteries have been used as power sources in various portable electronic devices. As these portable electronic devices have developed, demands on secondary batteries have rapidly increased. For example, as electronic devices have reduced in size and weight small sized and light weight secondary batteries are also required. However, since highly reactive materials such as lithium are typically provided inside secondary batteries, reductions in size and weight of such secondary batteries are constrained for safety reasons. Accordingly, a variety of studies have been conducted in order to develop a battery pack which can be small in size and light in weight while having good safety characteristics.

### SUMMARY

The present invention sets out to provide a battery pack which can be small in size and light in weight without compromising operational safety.

Embodiments also provide a battery pack having a protection element, thereby improving the safety of the battery pack.

According to an aspect of the present invention, there is provided a battery pack, including: a plurality of bare cells; a protection element positioned on the plurality of bare cells; a connecting tab configured to electrically connect between a plurality of adjacent bare cells and the protection element; and a protective circuit module positioned above the bare cell on which the protection element is positioned, wherein a hole is formed in an area of the protective circuit module, corresponding to at least one of the position at which the connecting tab and the bare cell are connected and the position at which the connecting tab and the protection element.

The connecting tab may include a first connecting portion connected to a first bare cell among the adjacent bare cells; a second connecting portion connected to a second bare cell among the adjacent bare cells; and a third connecting portion connected to the protection element.

The hole may include a first hole formed in an area of the protective circuit module, corresponding to the position at which the first connecting portion and the first bare cell are connected; a second hole formed in an area of the protective circuit module, corresponding to the position at which the second connecting portion and the second bare cell are connected; and a third hole formed in an area of the protective circuit module, corresponding to the position at which the third connecting portion and the protection element are connected.

The first connecting portion may be electrically connected to a first electrode terminal of the first bare cell. The second connecting portion may be electrically connected to a second electrode terminal of the bare cell. The third connecting portion may be electrically connected to a first lead portion of two lead portions of the protection element.

The first connecting portion may be connected to overlap with a top surface of the first electrode. The second connecting portion may be connected to overlap with a top surface of the second electrode terminal. The third connecting portion may be connected to overlap with a top surface of the first lead portion.

The holes may be respectively formed at positions corresponding to the first, second and third connecting portions.

A second lead portion of the two lead portions of the protection element may be electrically connected to the protective circuit module.

The connecting tab may further include a main body portion connected to the first, second and third connecting portions. The first, second and third connecting portions may be extended from the main body portion.

A first distance from the protective circuit module to the first, second or third connecting portion may be different from a second distance from the protective circuit module to the main body portion.

The first distance may be longer than the second distance.

A step difference may be provided in at least one of between the main body portion and the first connecting portion, between the main body portion and the second connecting portion, and between the main body portion and the third connecting portion.

The main body portion and the protective circuit module may be coupled to each other.

The main body portion and the protective circuit module may be coupled to each other through soldering.

The connection between the connecting tab and the bare cell, and the connection between the connecting tab and the protection element may be performed through the hole.

The connection between the connecting tab and the bare cell, and the connection between the connecting tab and the protection element may be performed through the hole, using welding.

The battery pack may further include a holder positioned on top surfaces of the plurality of bare cells to support the protect circuit module to the bare cells.

The protection element and the connecting tab may be positioned inside an opening formed in the holder.

The plurality of bare cells may be connected in parallel to each other.

At least some of the above and other features of the invention are set out in the claims.

Other features and advantages of the present invention will become more fully apparent from the following detailed description, taken in conjunction with the accompanying drawings.

Terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

Thus in a battery pack of the present invention, the protection element can be connected to a plurality of bare cells through the connecting tab, so that it is possible to implement the compactness and light weight in a battery pack without compromising safety.

### BRIEF DESCRIPTION OF THE DRAWINGS

Embodiments of the invention will now be described more fully hereinafter with reference to the accompanying drawings; however, the invention may be embodied in different forms and should not be construed as limited to the embodiments set forth herein. Rather, these embodiments are provided so that this disclosure will be thorough and complete, and will fully convey the scope of the invention to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a perspective view of a battery pack according to an embodiment of the present invention.
FIG. 2 is a perspective view of the battery pack in a state in which a protective circuit module is omitted from the battery pack shown in FIG. 1.
FIG. 3 is an exploded perspective view of the battery pack in a state in which the protective circuit module is omitted from the battery pack shown in FIG. 1.
FIG. 4 is a sectional view taken along line A-A' of the battery pack shown in FIG. 1.
FIG. 5 is an exploded perspective view of the battery pack shown in FIG. 1.
FIG. 6 is a perspective view of a battery pack according to another embodiment of the present invention.
FIG. 7 is a perspective view of the battery pack in a state in which a protective circuit module is omitted from the battery pack shown in FIG. 6.

### DETAILED DESCRIPTION

In the following detailed description, only certain embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

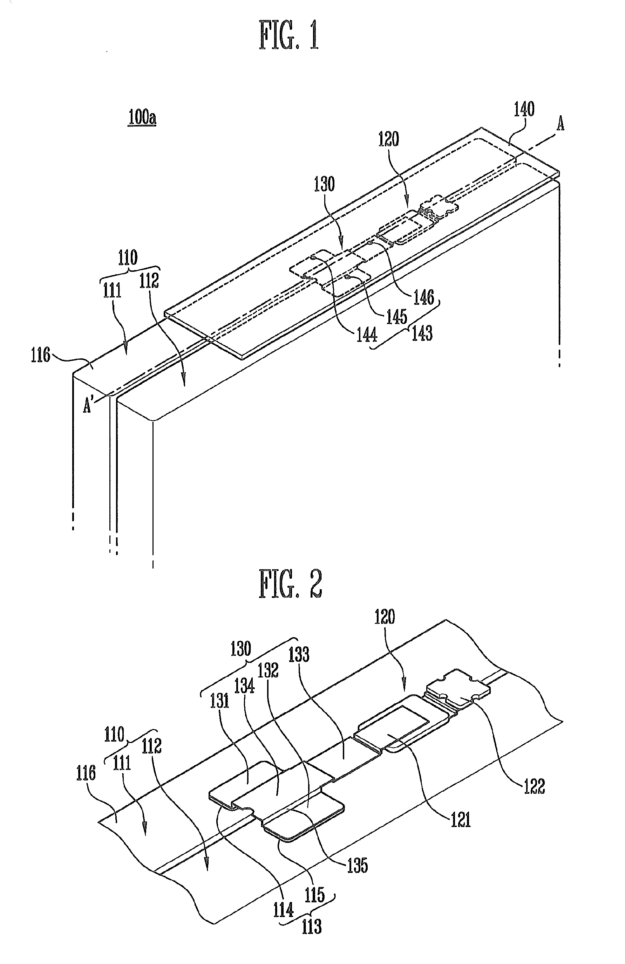

FIG. 1 is a perspective view of a battery pack 100a according to an embodiment of the present invention. Hereinafter, the battery pack 100a according to this embodiment will be described with reference to FIG. 1.

As shown in FIG. 1, the battery pack 100a according to this embodiment includes a plurality of bare cells 110, a protection element 120 positioned on one surface 116 of the bare cells 110, a connecting tab 130 configured to electrically connect between adjacent bare cells 110 and the protection element 120, and a protective circuit module 140 positioned above the one surface 116 of the bare cells 110. A plurality of holes 143 are formed in the protective circuit module 140. Although the protection element is positioned on one surface 116 of each of the bare cells 110 in this embodiment, it can be positioned on just a single one surface 116 of just one of the bare cells 110 in other embodiments.

Each bare cell 110 is a member in which electrochemical energy is generated by movements of ions or electrons.

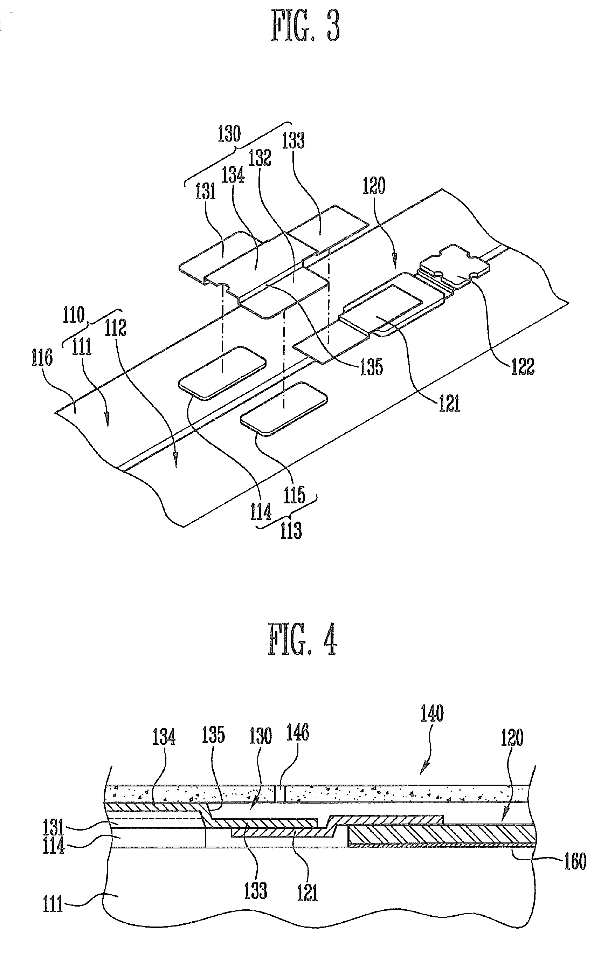

Each bare cell 110 may be manufactured by accommodating an electrode assembly and an electrolyte in a battery case. Here, the electrode assembly is formed by winding or stacking a positive electrode plate, a negative electrode plate and a separator interposed between these electrode plates. The electrode assembly generates energy through an electrochemical reaction between the electrode assembly and the electrolyte, and the generated energy is supplied to the outside of the bare cell 110 through an electrode terminal, etc. For example, the battery case may be a pouch-type, square-type or cylinder-type battery case. An electrode terminal 113 (see FIG. 3) is formed to protrude on the one surface 116 of each bare cell 110. The electrode terminal 113 is electrically connected to the protection element 120 described later through the connecting tab 130.

The plurality of bare cells 110 are positioned so that wide and flat surfaces among side surfaces adjacent to the surfaces 116 of the bare cells 110 are opposite to each other. The plurality of bare cells 110 may be connected in parallel or series. In this embodiment, the case where two bare cells 110 are connected in parallel will be described as an example.

FIG. 2 is a perspective view of the battery pack 100a in a state in which the protective circuit module 140 is omitted from the battery pack 100a shown in FIG. 1. FIG. 3 is an exploded perspective view of the battery pack 100a in a state in which the protective circuit module 140 is omitted from the battery pack 100a shown in FIG. 1. Hereinafter, the protection element 120 according to this embodiment will be described in detail with reference to FIGS. 2 and 3.

The protection element 120 is a member which is positioned on the one surface 116 of the bare cells 110 to sense a temperature of the battery pack 100a, and cuts off current as its resistance also increases when the temperature increases. Here, the protection element 120 is a member of which resistance is changed depending on temperature. For example, a positive temperature coefficient (PTC) element may be used as the protection element 120. If the temperature of the bare cell 110 or the battery pack 100a increases, the protection element 120 senses the increase in temperature, and the resistance of the protection element 120 increases. If the heat generated from the bare cell 110 or the battery pack 100a exceeds a predetermined amount, the current input/output to/from the protection element 120 can be cut off through first and second lead portions 121 and 122 provided to the protection element 120.

As a consequence of the invention, a protection element 120 need not be provided on each of the plurality of bare cells 110. For example, one protection element 120 may be used for two bare cells 110 as shown in FIG. 3. Thus, it is possible to reduce component cost, as compared with the case where the protection element 120 is connected to each of the plurality of bare cells 110. Further, it is possible to efficiently use a space inside the battery pack 100a including the plurality of bare cells 110. That is, the case where one protection element 120 is disposed on the two bare cells 110 requires only a space narrower than that required when two protection elements are disposed on the respective two bare cells 110, and hence it is possible to implement the compactness and lightweight of the battery pack 100a.

The first lead portion 121 of the protection element 120 is electrically connected to a plurality of bare cells 110 through the connecting tab 130 described later, and the second lead portion 122 of the protection element 120 is electrically connected to the protective circuit module 140 through, for example, soldering (see FIG. 1).

FIG. 4 is a sectional view taken along line A-A' of the battery pack 100a shown in FIG. 1. Hereinafter, the connecting tab 130 according to this embodiment will be described in detail with reference to FIGS. 2 to 4.

The connecting tab 130 is a member which electrically connects a plurality of bare cells 110 adjacent to the protection element 120. Here, the connecting tab 130 may electrically connect, for example, one protection element 120 and two bare cells 110 adjacent thereto, i.e. at least three members. More specifically, the connecting tab 130 may electrically connect between the first lead portion 121 of the protection element 120 and the electrode terminals 113 of the two bare cells 110. In this case, the connecting tab 130 includes a first connecting portion 131 connected to a first electrode terminal 114 of a first bare cell 111 of the two bare cells 110, a second connecting portion 132 connected to a second electrode terminal 115 of a second bare cell 112, and a third connecting portion 133 electrically connected to the first lead portion 121 of the protection element 120. To facilitate this, the connecting tab 130 has a shape extended in three directions. Here, the first, second and third connecting portions 131, 132 and 133 are integrally connected, and accordingly, the electrode terminals 113 of the two bare cells 110 and the protection element 120 can be electrically connected through the connecting tab 130. Although it has been described in this embodiment that the number of connecting portions is three, one protection element 120 may be connected to three or more bare cells 110 by increasing the number of connecting portions according to the number of bare cells 110. That is, if the number of connecting portions is implemented as N+1 when the number of bare cells 110 is N, a plurality of bare cells 110 can be electrically connected to one protection element 120 through the connecting tab 130.

Through the connecting tab 130 with the structure described above, one protection element 120 can be electrically connected to a plurality of bare cells 110. Accordingly, it is unnecessary to use the protection element 120 for each bare cell 110, so that it is possible to reduce component cost caused by the addition of the protection element 120 and to improve compactness and weight savings of the battery pack 100a. In addition, because the electrode terminals 113 of the plurality of bare cells 110 are electrically connected to one another through the connecting tab 130, it is possible to implement the parallel connection of the plurality of bare cells 110 through the connecting tab 130 without any separate connecting member. Thus, it is possible to reduce cost caused by the elimination of a component and further improve the compactness and weight of the battery pack 100a.

A main body portion 134 is connected at the point where the connecting portions 131, 132 and 133 meet one another. In this case, the connecting portions 131, 132 and 133 have a shape extended from the main body portion 134.

In order to implement the electrical connection between the bare cell 110 and the protection element 120, the connecting tab 130 may be made of a material having excellent electrical conductivity, e.g., an electrical conductive metal such as gold, silver, copper or nickel.

The connecting tab 130, the electrode terminal 113 of the bare cell 110 and the first lead portion 121 of the protection element 120 are formed to overlap with one another. Specifically, the first connecting portion 131 is positioned to overlap with a top surface of the first electrode terminal 114 of the first bare cell 111, i.e., the first electrode terminal 114 between the first electrode terminal 114 and the protective circuit module 140. The second connecting portion 132 is positioned to overlap with a top surface of the second electrode terminal 115 of the second bare cell 112. The third connecting portion 133 is positioned to overlap with a top surface of the first lead portion 121 of the protection element 120. On the whole, the connecting tab 130 is overlapped with the electrode terminal 113 of the bare cell 110 and the first lead portion 121 so as to be positioned higher than the electrode terminal 113 of the bare cell 110 and the first lead portion 121. Accordingly, the connecting tab 130 is entirely exposed, and the electrode terminal 113 of the bare cell 110 and the first lead portion 121 of the protection element 120 may have portions exposed or may have no portion exposed. In this case, the connection among the connecting tab 130, the electrode terminal 113 and the first lead portions 121 may be performed through, for example, welding.

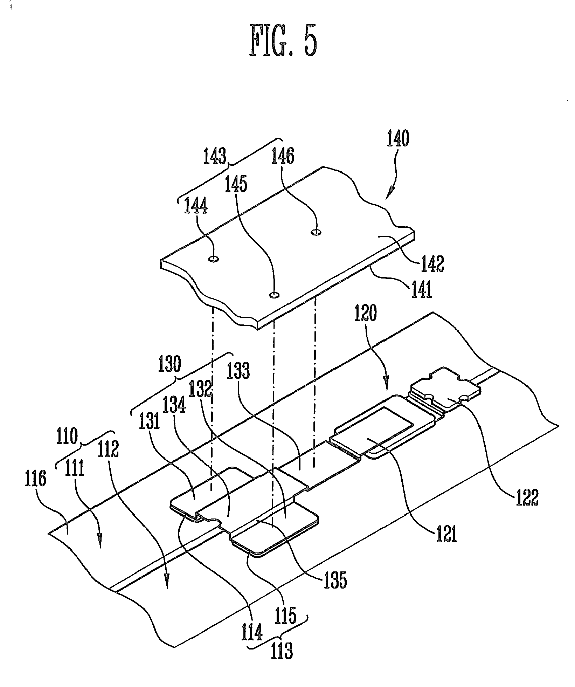

FIG. 5 is an exploded perspective view of the battery pack 100a shown in FIG. 1. Hereinafter, the protective circuit module 140 of the battery pack 100a according to this embodiment will be described with reference to FIGS. 1 to 5.

The protective circuit module 140 is a member which is positioned above the one surface 116 of the bare cell 110 on which the connecting tab 130 and the protection element 120 are positioned, to control voltage or current in the charging and discharging of the bare cell 110. The protective circuit module 140 is implemented with a circuit board on which a circuit pattern is formed, and several electronic components are mounted on at least one surface of the protective circuit module 140. Here, the electronic components may be a field effect transistor (FET), an integrated circuit (IC) and the like. The electronic component may perform a function of controlling the electrode assembly in the bare cell 110 or cutting off a circuit when the electrode assembly is abnormally operated. The circuit board of the protective circuit module 140 may include a switching circuit to more efficiently control or protect, together with the electronic component, the battery pack. Specifically, the protective circuit module 140 blocks overcharging, overdischarging, overcurrent, short circuit and reverse voltage of the battery pack 100a, so that it is possible to prevent explosion, overheat, leakage and charging/discharging characteristics from being deteriorated. Further, the protective circuit module 140 suppresses lowering of electrical performance and abnormal operation, so that it is possible to eliminate dangerous factors and to extend the lifespan of the battery pack 100a.

The protective circuit module 140 has a first surface 141 and a second surface 142 opposite to the first surface 141. Here, the first surface 141 of the protective circuit module 140 face the bare cell 110, and the second surface 142 of the protective circuit module 140 is exposed to the outside of the battery pack 100a. The second lead portion 122 of the protection element 120 is electrically connected to the first surface 141, and a pad connected to an external wire or the like is provided on the second surface 142. In this case, the protection element 120 and the connecting tab 130 are positioned between the first surface 141 of the protective circuit module 140 and the bare cell 110. Accordingly, the protection element 120, the connecting tab 130 and the electrode terminal 113 of the bare cell 110 are not be exposed when being viewed from the top of the battery pack 100a.

A plurality of holes 143 that extend from the first surface 141 to the second surface 142 are formed in the protective circuit module 140. In this case, the holes 143 are formed to respectively correspond to the position at which the connecting tab 130 and the protection element 120 are connected and the position at which the connecting tab 130 and the bare cell 110 are connected. In particular, three holes 143 including first, second and third holes 144, 145 and 146 are respectively formed in areas of the protective circuit module 140 to correspond to the position at which the first connecting portion 131 of the connecting tab 130 is connected to the first electrode terminal 114 of the first bare cell 111, the position at which the second connecting portion 132 of the connecting tab 130 is connected to the second electrode terminal 115 of the second bare cell 112, and the position at which the third connecting portion 133 of the connecting tab 130 is connected to the first lead portion 121 of the protection element 120.

Therefore, in a case where the first connecting portion 131 is connected to overlap with the first electrode terminal 114, the second connecting portion 132 is connected to overlap with the second electrode terminal 115, and the third connecting portion 133 is connected to overlap with the first lead portion 121, the first, second and third connecting portions 131, 132 and 133 relatively positioned higher than the first electrode terminal 114, the second electrode terminal 115 and the first lead portion 121 may be exposed through the respective first, second and third holes 144, 145 and 146. In this case, the function of the holes 143 is to facilitate the connection between the connecting tab 130, and the bare cell 110 and the protection element 120. In this regard and, equipment such as welding rods are inserted through the respective holes 143, so that the first connecting portion 131, the first electrode terminal 114 can be welded to each other, the second connecting portion 132 and the second electrode terminal 115 can be welded to each other, and the third connecting portion 133 and the first lead portion 121 can be welded to each other.

Meanwhile, in a case where the protective circuit module 140 and the connecting tab 130 are not coupled to each other but separated from each other, the protective circuit module 140 and the connecting tab 130 are spaced apart from each other, and therefore, a noise or undesired short circuit may occur. In order to solve such a problem, it may be considered that the protective circuit module 140 and the connecting tab 130 are manufactured as one module by being previously coupled to each other. In this case, the protective circuit module 140 covers the connecting tab 130, and hence it may be difficult to electrically connect the connecting tab 130 to the bare cell 110 and the protection element 120. That is, it may be very difficult to weld the connecting tab 130 to the bare cell 110 and the protection element 120 by inserting a welding rod into a narrow space between the protective circuit module 140 and the bare cell 110 when the battery pack 110a is manufactured. However, in the battery pack 100a according to this embodiment, the plurality of holes 143 for the connection of the connecting tab 130 are provided in the protective circuit module 140, and hence it can be very easy to weld the connecting tab 130 to the bare cell 110 and the protection element 120 by inserting the welding rod into the hole 143. That is, in the battery pack 100a according to this embodiment, the protective circuit module 140 and the connecting tab 130 are previously coupled to each other, so that it is possible to solve a problem caused by the spacing between the protective circuit module 140 and the connecting tab 130 and to provide convenience in the process of connecting the connecting tab 130 to the bare cell 110 and the protection element 120. The holes therefore facilitate the manufacturing process and this, in turn, enables the described arrangement of connection tab and protection element to be used, thereby offering the desired size and weight characteristics.

In a case where the protective circuit module 140 and the connecting tab 130 are coupled as one module, the protective circuit module 140 and the connecting tab 130 may be physically coupled through, for example, an adhesive or solder. The point of the connecting tab 130 coupled to the protective circuit module 140 may become the main body portion 134 which is not directly contacted with the bare cell 110 and the protection element 120, but the present invention is not limited thereto.

Meanwhile, in a case where the connecting tab 130 is implemented in a planar structure, the adhesive or solder between the main body portion 134 and the protective circuit module 140 is formed very thin even though the area actually coupled to the protective circuit module 140 is the main body portion 134. Hence, the connecting portions 131, 132 and 133 may be substantially contacted with the protective circuit module 140 or may be positioned very closely to the protective circuit module 140. In this case, the space occupied by the connecting tab 130 in the protective circuit module 140 may be relatively increased. Since various electronic components and circuit patterns are formed on the protective circuit module 140, an undesired short circuit may occur.

In order to solve such a problem, as shown in FIGS. 1 to 5, the connecting tab 130 of the battery pack 100a according to this particular embodiment has a shape in which the main body portion 134 is protruded. That is, in the connecting tab 130, the distance from the protective circuit module 140 to the main body portion 134 is different from that from the protective circuit module 140 to the first, second or third connecting portion 131, 132 or 133. If the protruded main body portion 134 is coupled to the protective circuit module 140, the connecting portions 131, 132 and 133 may be relatively more distant from the protective circuit module 140 than the main body portion 134. That is, a first distance from the protective circuit module 140 to the first, second or third connecting portion 131, 132 or 133 may be different from a second distance from the protective circuit module 140 to the main body portion 134. The first distance may be longer than the second distance. Thus, the area contacted with the protective circuit module 140 substantially becomes the main body portion 134, and accordingly, it is possible to efficiently use the limited space in the protective circuit module 140 and to improve the electrical safety of the battery pack 100a.

The specific configuration of the connecting portion 130 may be implemented by forming a step difference 135 in at least one of between the main body portion 134 and the first connecting portion 131, between the main body portion 134 and the second connecting portion 132, and between the main body 134 and the third connecting portion 133. However, the present invention is not limited to the step difference 135. For example, the configuration in which a portion of the connecting portion 130 is protruded, such as an inclination surface, may be variously implemented.

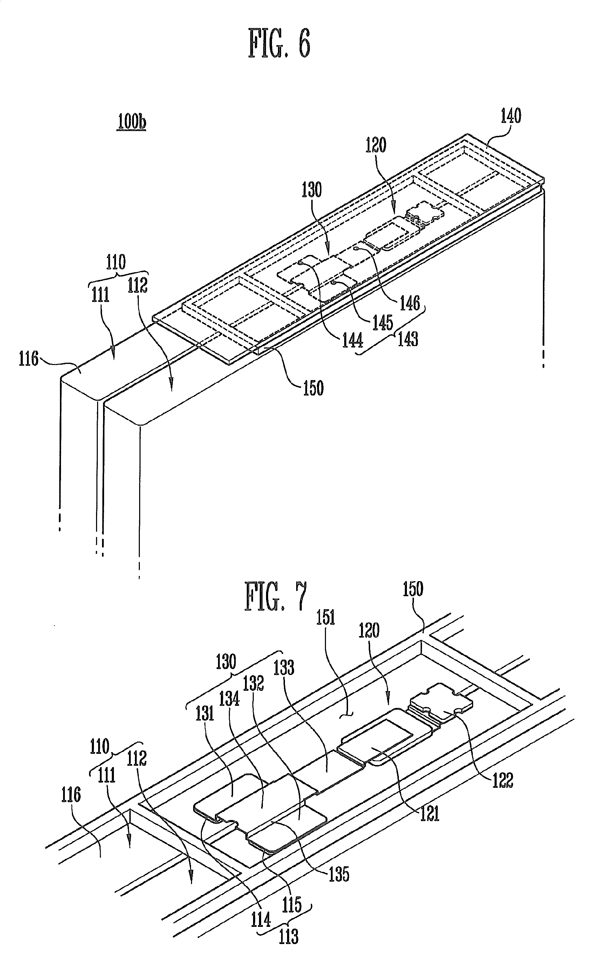

FIG. 6 is a perspective view of a battery pack 100b according to another embodiment of the present invention. FIG. 7 is a perspective view of the battery pack 100b in a state in which a protective circuit module 140 is omitted from the battery pack 100b shown in FIG. 6. Here, components identical or corresponding to those of the aforementioned embodiment are designated by like reference numerals, and their detailed descriptions will be omitted to avoid redundancy.

The battery pack 100b according to this embodiment includes a plurality of bare cells 110, a protection element 120, a connecting tab 130 configured to electrically connect between the bare cell 110 and the protection element 120, and a protective circuit module 140 having a plurality of holes 143. The battery pack 100b further includes a holder 150.

The holder 150 is positioned on the one surface 116 of the bare cells 110, on which the connecting tab 130 and the protection element 120 are positioned, and the protective circuit module 140 is positioned on the holder 150. That is, it can be seen that the holder 150 is interposed between the bare cell 110 and the protective circuit module 140. In this case, the holder 150 may perform a function of setting the position of the protective circuit module 140. At least one opening 151 is provided inside the holder 150, and the protection device 120 and the connecting tab 130 are positioned inside the opening 151. Thus, the protection element 120 and the connecting tab 130 cannot be exposed to the outside by the holder 150 and the protective circuit module 140, and accordingly, it is possible to improve the electrical safety of the battery pack 100b.

Meanwhile, the protective circuit module 140 is positioned on the holder 150, and hence the height relationship described below may be set between the holder 150 and the connecting tab 130 having the protruding-shaped main body portion 134 coupled to the protective circuit module 140. Specifically, the height of the holder 150 may be equal to the sum of the height of the electrode terminal 113, the thickness of the first connecting portion 131, the difference in height between the first connecting portion 131 and the main body portion 134, and the thickness of the main body portion 134, and accordingly, top surfaces of the holder 150 and the main body portion 134 can form the same plane. Thus, the protective circuit module 140 can be connected to the electrode terminal 113 without any deformation of the connecting tab 130, caused by a difference in height, while being stably positioned in the holder 150.

Embodiments of the invention have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack comprising:
first and second bare cells;
a protection element situated over at least one of the bare cells;
a connecting tab electrically connected between the said bare cells and the protection element; and
a protective circuit module positioned over at least one of the bare cells,
wherein the protective circuit module comprises a hole at a position that corresponds to at least one of a position at which the connecting tab and one of the bare cells are connected and a position at which the connecting tab and the protection element are connected.

2. A battery pack according to claim 1, wherein the connecting tab includes:
a first connecting portion connected to the first bare cell;
a second connecting portion connected to the second bare cell; and
a third connecting portion connected to the protection element.

3. A battery pack according to claim 2, wherein the protective circuit module comprises:
a first said hole formed at a location corresponding to a position at which the first connecting portion and the first bare cell are connected;
a second said hole formed at a location corresponding to a position at which the second connecting portion and the second bare cell are connected; and
a third said hole formed at a location corresponding to a position at which the third connecting portion and the protection element are connected.

4. A battery pack according to claim 2 or 3, wherein:
the first connecting portion is electrically connected to a first electrode terminal forming part of the first bare cell,
the second connecting portion is electrically connected to a second electrode terminal forming part of the second bare cell, and
the third connecting portion is electrically connected to a first lead portion of two lead portions of the protection element.

5. A battery pack according to claim 4, wherein:
the first connecting portion overlaps a top surface of the first electrode terminal,
the second connecting portion overlaps a top surface of the second electrode terminal, and
the third connecting portion overlaps a top surface of the first lead portion.

6. A battery pack according to claim 4 or 5, wherein a second lead portion of the two lead portions of the protection element is electrically connected to the protective circuit module.

7. A battery pack according to one of claims 2 to 6, wherein the connecting tab further includes a main body portion connected to the first, second and third connecting portions, and
wherein the first, second and third connecting portions are extended from the main body portion.

8. A battery pack according to claim 7, wherein the connecting tab comprises a bending portion between the main body portion and at least one of the first, second and third connecting portions.

9. A battery pack according to claim 7 or 8, wherein a first distance from the protective circuit module to the first, second or third connecting portion is different from a second distance from the protective circuit module to the main body portion.

10. A battery pack according to claim 9, wherein the first distance is greater than the second distance.

11. A battery pack according to one of claims 7 to 10, wherein the main body portion and the protective circuit module are coupled to each other.

12. A battery pack according to claim 11, wherein the main body portion is soldered to the protective circuit module.

13. A battery pack according to any preceding claim, further comprising a holder positioned on a top surface of at least one of bare cells in order to support the protective circuit module on the bare cell.

14. A battery pack according to claim 13, wherein the protection element and the connecting tab are positioned inside an opening formed in the holder.

15. A battery pack according to any preceding claim, wherein at least one of the connection between the connecting tab and a said bare cell and the connection between the connecting tab and the protection element is at least partially welded at a location corresponding to a said hole.
